Europäisches Patentamt

European Patent Office

Office européen des brevets

(19)

(11) **EP 1 306 359 A1**

(12) **EUROPEAN PATENT APPLICATION**
published in accordance with Art. 158(3) EPC

(43) Date of publication:
02.05.2003 Bulletin 2003/18

(51) Int Cl.⁷: **C04B 41/87**, C04B 41/89

(21) Application number: 01932149.6

(86) International application number:
**PCT/JP01/04195**

(22) Date of filing: **18.05.2001**

(87) International publication number:
**WO 01/087802 (22.11.2001 Gazette 2001/47)**

(84) Designated Contracting States:
**AT BE CH CY DE DK ES FI FR GB GR IE IT LI LU MC NL PT SE TR**

(30) Priority: **19.05.2000 JP 2000148170**

(71) Applicants:
• **NIPPON STEEL CORPORATION**
**Tokyo 100-8071 (JP)**
• **Krosakiharima Corporation**
**Kitakyushu-shi, Fukuoka 806-8586 (JP)**

(72) Inventors:
• **MATSUI,Taijiro**
**NIPPON STEEL CORP. YAWATA WORKS**
**Kitakyushu-shi, Fukuoka 804-8501 (JP)**

• **IMAGAWA,Hiroshi**
**NIPPON STEEL CORP. YAWATA WORKS**
**Kitakyushu-shi, Fukioka 804-8501 (JP)**
• **KAYAMA,Tsuneo**
**C/O NIPPON STEEL CORP Tech. Dev.**
**Futtsu-shi, Chiba 293-8511 (JP)**
• **ASO, Shinji,**
**C/O NIPPON STEEL CORP. Tech. Dev.**
**Futtsu-shi, Chiba 293-0011 (JP)**
• **MATSUO, Masataka,**
**C/O KROSAKI HARIMA CORP**
**Kitakyushu-shi, Fukuoka 806-8586 (JP)**
• **HONDA, Kazuhiro, C/O KROSAKI HARIMA CORP**
**Kitakyushu-shi, Fukuoka 806-8586 (JP)**

(74) Representative: **VOSSIUS & PARTNER**
**Siebertstrasse 4**
**81675 München (DE)**

(54) **HEAT INSULATING MATERIAL HAVING HIGH DURABILITY, METHOD FOR PRODUCING THE SAME, USE OF THE SAME, AND METHOD FOR APPLYING THE SAME**

(57) The present invention provides a refractory and heat insulating material excellent in heat resistance, slag resistance, molten steel resistance, wear resistance, and mechanical impact resistance, and relates to a highly durable heat insulating material characterized by having a thermally sprayed film of refractory ceramic on a surface of a formed body of an inorganic refractory fiber which surface is covered with a cloth material or was covered with the cloth material until it burned out by flame fusion coating of refractory ceramic powder material during the fabricating process of the heat insulating material, with an application film of a surface hardening material acting as an intermediary layer between the thermally sprayed film and the fiber body.

Fig.1(a)
Fig.1(b)
Fig.1(c)
Fig.1(d)
Fig.1(e)
Fig.1(f)
Fig.1(g)

EP 1 306 359 A1

**Description**

Technical Field

This invention relates to a highly durable heat insulating material and a fabrication method, uses and an installation method of the same. Here, the uses of the heat insulating material include furnaces, vessels for materials such as molten metal, gas ducts, motorway tunnels, and so forth in which the highly durable heat insulating material is used as refractory material.

Background Art

Bricks and similar materials have long been used as the refractory material for high temperature furnaces and the like without serious problems with respect to their refractory performance. Recently, however, weight and thickness reduction of the refractory material is pursued so that the mass of the apparatuses such as the furnaces and structural members of constructions such as the tunnels may be made smaller, work efficiency be greatly improved, and repair work be simplified.

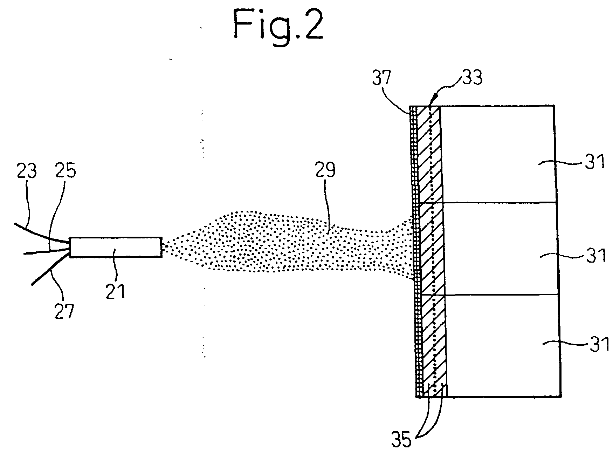

Japanese Unexamined Patent Publication No. S62-288183 describes a method of fabricating a composite refractory material having a sufficiently strong surface and a thin refractory layer by thermally spraying a refractory ceramic material onto a surface of a formed body of refractory fiber. What is described in the Publication is, more specifically, a zirconia fiber blanket (a formed body of refractory fiber) with a hard and compact zirconia layer, having an apparent porosity of 5%, a flexural strength of 150 kg/cm$^2$ and a thickness of 2 mm, formed in its surface layer by spraying zirconia powder 0.3 mm or less in grain size by plasma jet spraying method, as shown in Fig. 2 of said Publication. The Publication describes that the composite of the zirconia fiber and the refractory material maintains a cottony state characteristic of fibrous materials except for the hard surface layer 2 mm in thickness.

The Publication discloses the use of the proposed material for comparatively mild applications such as small furnaces for clean baking, shelf boards for production of electronic elements, ceramic elements and the like, ceiling boards of high temperature furnaces, etc. But, when used in severer conditions, the proposed material is not durable and, further, when a fiber blanket is used as the formed body of refractory fiber, the bonding strength between the fiber blanket and the refractory ceramic is low and they peel apart easily. Thus, no refractory and heat insulating material excellent in durability (more specifically, heat resistance, slag resistance, molten steel resistance, wear resistance, and mechanical impact resistance) has been made available yet.

Facing this situation and in consideration of the problems of conventional technologies, the inventors of the present invention proposed a highly durable heat insulating material characterized by having a thermally sprayed film of refractory ceramic on a surface of a formed body of inorganic heat insulating fiber, with an application film of a surface hardening material formed between them, and a method of fabricating the same, with a view to providing a refractory and heat insulating material excellent in heat resistance, slag resistance, molten steel resistance, wear resistance, and mechanical impact resistance (Japanese Patent Application No. 2000-058766). The Application proposes a method to form the application film of the surface hardening material and the thermally sprayed film of refractory ceramic by applying a raw material mix of the constituents of the surface hardening material to a surface of the formed body of inorganic heat insulating fiber and then spraying a refractory ceramic powder material by flame fusion coating onto the surface of the raw material mix of the constituents of the surface hardening material.

The heat insulating material according to said Application has the following advantages (utility): ① a strong thermally sprayed film is formed owing to the surface hardening material acting as a bond between the inorganic heat insulating fiber body and the thermally sprayed film (showing a strong adhesion to the surface hardening material); and ② the thermally sprayed film not only protects the refractory material against attack caused by mill scale, alkali, etc., but also very effectively prevents the fiber structure from being destroyed by a high-speed hot-air blast and dust (excellent in resistance of the thermally sprayed film against corrosion by mill scale, etc.).

The present inventors, however, did not remain complacent about the invention and continued to earnestly investigate the possibility of remarkably advancing and improving the technology further and, as a result, identified the following technical problems ① and ② to which said invention did not offer any solution:

    ① The inorganic heat insulating fiber has only a very low strength by nature and, therefore, the surfaces of its formed body easily become rough and bumpy during the application of the surface hardening material. Owing to the roughness and bumpiness, the thermally sprayed film is formed inevitably in a rough and bumpy shape following the condition of the surface of the fiber body. The roughness and bumpiness of the thermally sprayed film makes it easy for dust and mill scale to stick onto its surface and, once a small deposit of the dust and mill scale form, they grow quickly and fall of their own weight. However, since the dust and mill scale strongly stick to the thermally sprayed film, the falling deposit destroys and peels off not only the thermally sprayed film but also parts of the application film of the surface hardening material and the fiber structure of the inorganic heat insulating fiber underlying the thermally sprayed film. This problem was discovered when a form of damage of the heat insulating material in actual application was identified as falling-off, from inside the fiber layer caused by the falling of the deposit of mill scale, etc. of its own weight.

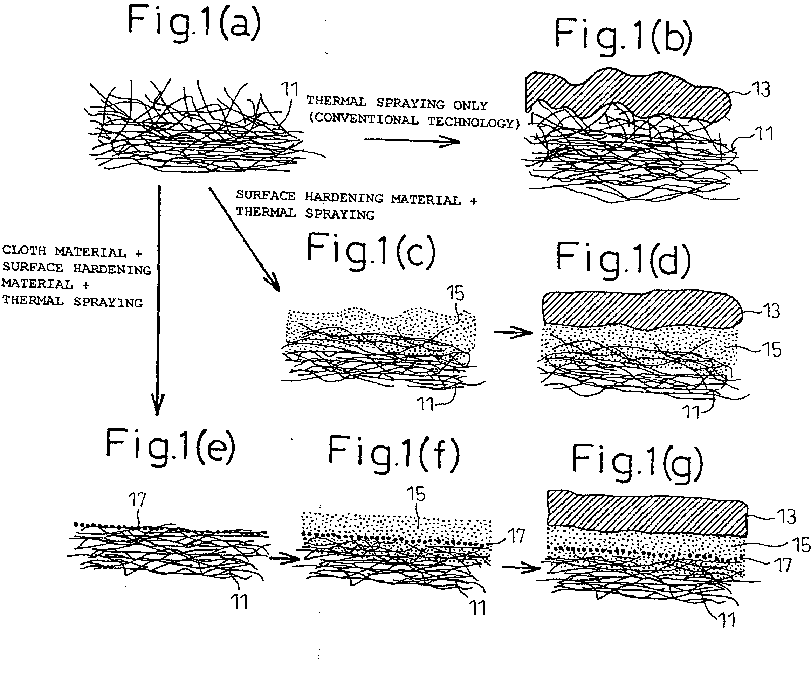

② Since the surface of the inorganic heat insulating fiber body is not smooth (see Fig. 1(a) explained later), if the surface of the raw material mix of the constituents of the surface hardening material is made smooth by controlling the amount of its application, its thickness becomes uneven. And, for this reason, during the thermal spraying of the refractory ceramic, cracks are likely to develop not only in the application film of the surface hardening material formed during the process but also in the thermally sprayed film of the refractory ceramic, as a result of uneven thermal expansion. When cracks are thus formed, dust and mill scale stick along the cracks more easily, causing the destruction of the thermally sprayed film, the application film and the fiber structure along the cracks in the same manner as described above.

The above means the following: as the inorganic heat insulating fiber has, by nature, only a very low strength, and the surfaces of its formed body cannot be kept smooth easily because of the tendency to become fluffy by, for instance, handling during the installation work of the heat insulating material, even when the surface hardening material having the strong bonding function is provided between the inorganic heat insulating fiber layer and the thermally sprayed film, the bumpiness of the surface of the thermally sprayed film and uneven thickness of the applied layer are likely to appear during fabrication; and this will cause the deposit of dust and mill scale on the thermally sprayed film surface during use, leading to the destruction of the structure of the inorganic heat insulating fiber layer and consequent short service life of the refractory and heat insulation material itself.

In view of the above technical problems, therefore, the object of the present invention is to further improve the refractory and heat insulating material excellent in heat resistance, slag resistance, molten steel resistance, wear resistance, and mechanical impact resistance and its fabricating method which the present inventors already proposed and to provide a refractory and heat insulation material and a method of fabricating the same through the solution of said technical problems. More specifically, the object of the present invention is to provide a refractory and heat insulation material excellent in heat resistance, slag resistance, molten steel resistance, wear resistance, and mechanical impact resistance and, in addition, in the surface smoothness (meaning that the problems such as the bumpiness and cracking of the surface are greatly improved) and having a remarkably improved service life, and a method of fabricating the same.

Another object of the present invention is to provide a refractory and heat insulating material widely applicable to uses in stringent conditions such as walls, ceilings, covers and support columns of various furnaces (including those for non-ferrous industries) such as heating furnaces and hot blast stoves, gas ducts, and motorway tunnels.

Yet another object of the present invention is to provide a light and thin refractory and heat insulating material with a view to greatly enhancing work efficiency through the reduction of the mass of the apparatuses such as furnaces and structural members of constructions such as tunnels, keeping its surface smooth by preventing the surface of the inorganic heat insulating fiber body from becoming fluffy by handling during the installation work of the refractory and heat insulating material and making repair work easy, and to provide a furnace, a smoke exhaustion facility and a tunnel using the same, and a method of installing the same for said uses.

Disclosure of the Invention

The objects of the present invention are achieved through (1) to (12) below:

(1) A highly durable heat insulating material characterized by having a thermally sprayed film of refractory ceramic on a surface of a formed body of an inorganic refractory fiber which surface is covered with a cloth material or was covered with the cloth material until it burned out during the fabricating process of the heat insulating material, with an application film of a surface hardening material between the thermally sprayed film and the fiber body.

(2) A highly durable heat insulating material according to (1) characterized in that the size of the mesh of said cloth material is such that a raw material mix of the constituents of the surface hardening material can pass through it without separating into component materials.

(3) A highly durable heat insulating material according to (1) or (2) characterized in that the size of the mesh of said cloth material is from 0.2 to 10 mm.

(4) A highly durable heat insulating material according to any one of (1) to (3) characterized in that said cloth material is composed of a burned out cloth material, an unburned residual cloth material or a combination of the two.

(5) A highly durable heat insulating material according to any one of (1) to (4) characterized in that said inorganic heat insulating fiber is composed of alumina-silica, clay, zirconia, mullite, zircon, magnesia, calcia, dolomite, silicon carbide, silicon nitride, carbon fiber, or a combination of two or more of them.

(6) A highly durable heat insulating material according to any one of (1) to (5) characterized in that said refractory ceramic powder material is composed of one or more selected from the group of alumina-silica, fire clay, zirconia, mullite, zircon, magnesia, calcia, dolomite, chamotte, corundum, bauxite, alunite, silicon carbide and chromite as simple substances and composites of them.

(7) A highly durable heat insulating material according to any one of (1) to (6) characterized in that the high temperature characteristic of said application film of the surface hardening material is similar to that of the thermally sprayed film of the refractory ceramic.

(8) A method of fabricating the highly durable heat insulating material according to any one of (1) to (7) characterized by:

covering a surface of the formed body of the inorganic heat insulating fiber with the cloth material;
applying the raw material mix of the constituents of the surface hardening material to the surface of the formed body of the inorganic heat insulating fiber covered with the cloth material; and
forming the application film of the surface hardening material and the thermally sprayed film of the refractory ceramic by spraying refractory ceramic powder material by flame fusion coating onto the surface of the formed body of the inorganic heat insulating fiber to which the raw material mix of the constituents of the surface hardening material has been applied.

(9) A furnace characterized by using the highly durable heat insulating material according to any one of (1) to (7) as a part or the whole of its refractory.

(10) A smoke exhaust facility characterized by using the highly durable heat insulating material according to any one of (1) to (7) as a part or the whole of its refractory.

(11) A tunnel characterized by using the highly durable heat insulating material according to any one of (1) to (7) as a part or the whole of its refractory.

(12) A method of installing the highly durable heat insulating material for the use according to any one of (9) to (11) characterized by:

covering a surface of a steel shell, a refractory material or concrete with a formed body or bodies of the inorganic heat insulating fiber a surface of which is covered beforehand with the cloth material;
applying the raw material mix of the constituents of the surface hardening material to the surface of the fiber body covered with the cloth material; and
forming the application film of the surface hardening material and the thermally sprayed film of the refractory ceramic by spraying the refractory ceramic powder material by flame fusion coating onto the surface of the formed body of the inorganic heat insulating fiber to which the raw material mix of the constituents of the surface hardening material has been applied.

Brief Description of the Drawings

Fig. 1 comprises schematic sectional views showing the highly durable heat insulating material according to the present invention and the fabrication processes of the same. Fig. 1(a) is a schematic sectional view of a surface portion of the formed body of the inorganic refractory fiber, and Fig. 1(b) is a comparative view (a schematic sectional view of a completion state) showing a case in which a layer of the thermally sprayed film of the refractory ceramic is formed directly on a surface of the formed body of the inorganic refractory fiber shown in Fig. 1(a). Fig. 1(c) is a schematic sectional view showing a case in which an application film of the surface hardening material is formed at a surface layer of the fiber body shown in Fig. 1(a), and Fig. 1(d) is a comparative view (a schematic sectional view of a completion state) showing a case in which a thermally sprayed film is formed on the application film of the surface hardening material shown in Fig. 1(c). Fig. 1(e) is a schematic sectional view showing a case in which the cloth material covers a surface of the fiber body shown in Fig. 1(a), Fig. 1(f) is a schematic sectional view showing a case in which an application film of the surface hardening material is formed on the smooth surface of the fiber body covered with the cloth material shown in Fig. 1(e), and Fig. 1(g) is a schematic sectional view showing the final completion state of the highly durable heat insulating material according to the present invention after forming the thermally sprayed film on the application film of the surface hardening material having a very smooth surface shown in Fig. 1(f).

Fig. 2 is a schematic view showing the flame fusion coating process used in the method of fabricating the highly durable heat insulating material according to the present invention.

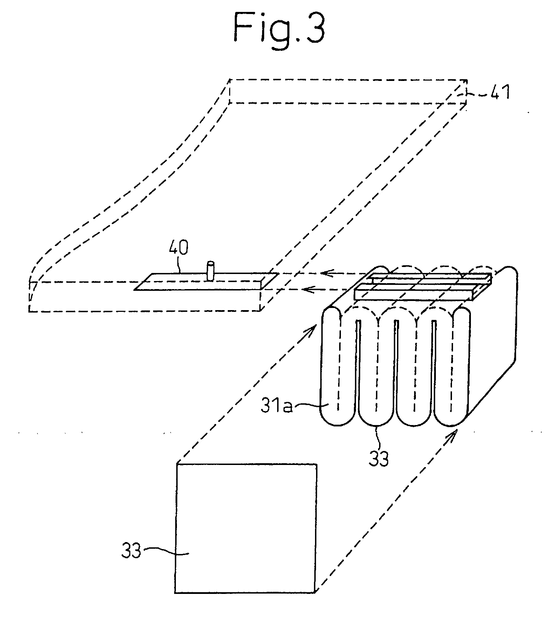

Fig. 3 is an explanatory illustration showing the method of, and procedures for, attaching the cloth material to a surface of a block of ceramic fiber and the method of and procedures for installing the block to a tundish cover, according to the methods of fabricating and installing the highly durable heat insulating material of the present invention.

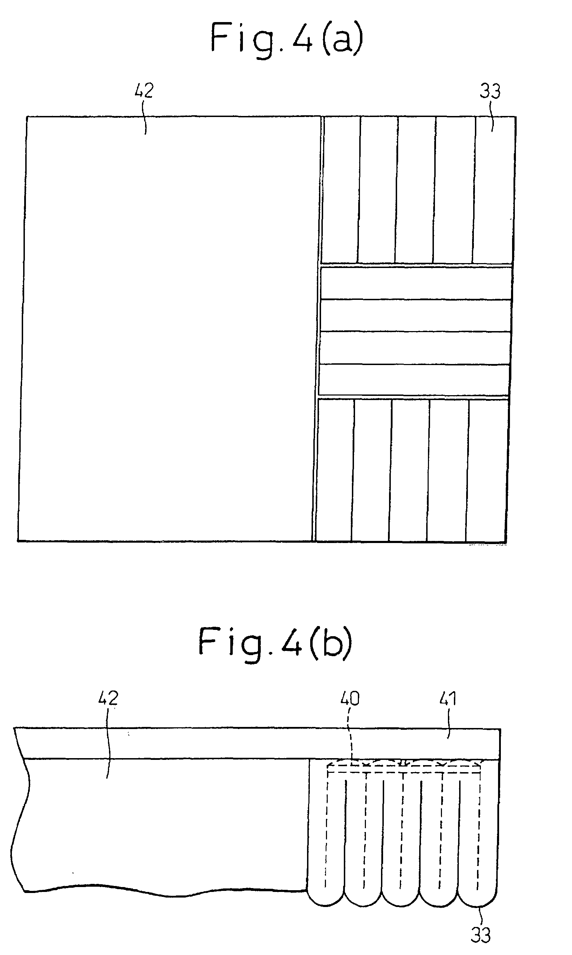

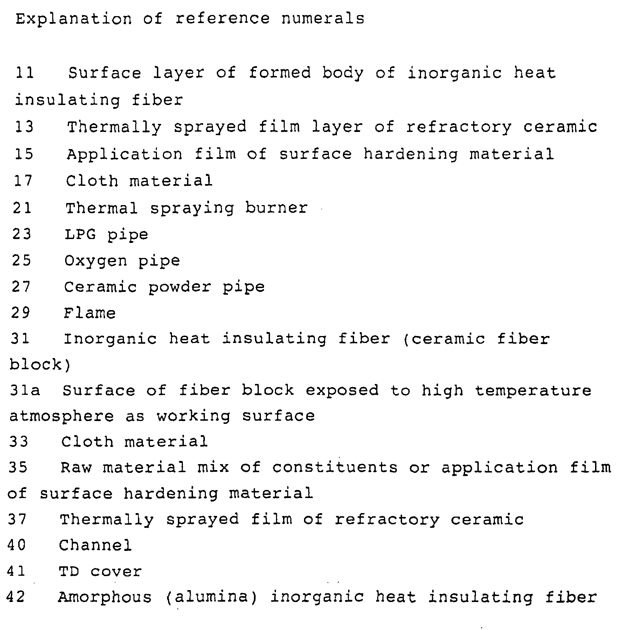

Fig. 4 comprises schematic views showing the state in which the blocks of the ceramic fiber and amorphous inorganic heat insulating fiber (alumina) are covered with the cloth material and installed in a tundish cover in accordance with the method of installing the highly durable heat insulating material according to the present invention. Fig. 4(a) is a front view and Fig. 4(b) a plan view when the side exposed to a high temperature atmosphere as the working side is regarded as the front side.

Best Mode for Carrying out the Invention

A highly durable heat insulating material according to the present invention is characterized by having a thermally sprayed film of refractory ceramic on a surface of a formed body of inorganic refractory fiber which is covered with a cloth material or was covered with the cloth material until it burned out during the fabricating process of the heat insulating material (more specifically, by the flame fusion coating of the refractory ceramic powder material), with an application film of a surface hardening material acting as an intermediary between the thermally sprayed film and the fiber body.

In a highly durable heat insulating material according to the present invention, the following useful and favorable effects ① to ③ are obtained by covering a surface of the formed body of the inorganic heat insulating fiber with the cloth material, at least until the flame fusion coating of the refractory ceramic powder material is applied.

① The surface of the formed body of the inorganic heat insulating fiber is made smooth and the surface unevenness is greatly reduced and, as a result, an application film of the surface hardening material and a thermally sprayed film of the refractory ceramic can be formed with a smooth surface on said surface of the fiber body. This reduces the amount of deposit of dust and mill scale, which stick to the surface if it is bumpy.

② With a smoothed surface of the formed body of the inorganic heat insulating fiber, the thicknesses of the application film of the surface hardening material and the thermally sprayed film of the refractory ceramic become homogenous and, consequently, cracks do not occur in them by differential thermal expansion during the use of the heat insulating material.

③ The raw material mix of the constituents of the surface hardening material infiltrates homogeneously into the surface portion of the formed body of the inorganic heat insulating fiber, and the infiltrated material mix is changed into an application film by the flame fusion coating. The application film thus formed has a strong bonding effect (a very strong adhesion) to the formed body of the inorganic heat insulating fiber and the thermally sprayed film.

In addition to the above, the construction (structure) of a heat insulating material according to the present invention makes it easy for the thermally sprayed refractory ceramic to be deposited onto the fiber and thus cracks do not develop when its film cools and contracts after the thermal spraying or when the film expands and contracts during the use of the heat insulating material. Thus, a thermally sprayed film excellent in various aspects of durability such as heat resistance, slag resistance, molten steel resistance, wear resistance, and mechanical impact resistance is firmly fixed. As a consequence, a lighter and thinner refractory material is made available and that decreases the mass of apparatuses such as furnaces and structural members of constructions such as tunnels, greatly improving work efficiency and simplifying repair work. As a result, the heat insulating material according to the present invention is made widely applicable to uses in severe conditions such as walls, ceilings, covers and support columns of various kinds of furnaces (including those for non-ferrous industries) such as heating furnaces and hot blast stoves, gas ducts, and motorway tunnels.

Here, the material of the inorganic heat insulating fiber is not stringently limited but any material considered as best suitable for each application may be selected. Publicly known kinds of inorganic heat insulating fiber such as alumina-silica, clay, zirconia, mullite, zircon, magnesia, calcia, dolomite, silicon carbide, silicon nitride, carbon fiber, or a combination of two or more of them can be used for the purpose. Preferable combinations are alumina + silica + zirconia, mullite + zirconia, magnesia + dolomite, alumina + silica + carbon fiber, magnesia + silica + carbon fiber, magnesia + chromia + silica + zirconia, and so forth. Similar fiber materials commercially available in the market can also be used.

The shape of the formed body of the inorganic heat insulating fiber is not stringently limited, either, but any shape obtainable by publicly known forming technologies for inorganic heat insulating fiber materials considered as best suitable for each application may be selected. Specifically, the formed body may be in the shape of rectangular block, board, felt, blanket, paper sheet, cloth, tape, rope, plate, rectangular prism, cylinder, or a lamination formed of any combination of these, or, further, any special shape tailored for a specific application.

In the variety of shapes of the formed body of the inorganic heat insulating fiber, the plane of lamination of the inorganic heat insulating fiber in the form of a block, for instance, and the surface on which the application film is formed may form various angles. When the plane of lamination of the fiber body in the form of a block is parallel to the surface on which the application film is formed and a thermally sprayed film of the refractory ceramic is formed on the surface of the block, with the application film of the surface hardening material formed in between, the inorganic heat insulating fiber block easily peels off at a plane of lamination. When the plane of lamination of the fiber block is parallel to the surface on which the application film is formed, the pulling resistance of the fiber is the smallest and, therefore, it is preferable to arrange that the surface on which the application film is formed and the plane of lamination of the inorganic heat insulating fiber are not parallel to each other. When the plane of lamination of the fiber block is perpendicular to the surface on which the application film is formed and the thermally sprayed film of the refractory ceramic is formed on the surface of the block, with the application film of the surface hardening material formed in between, the inorganic heat insulating fiber block does not easily peel off at a plane of lamination, and this arrangement is preferable.

The optimum thickness of the formed body of the inorganic heat insulating fiber varies depending on the form and object of use and thus it is inappropriate to unequivocally define an optimum thickness, but a preferable thickness range is from 0.1 to 500 mm or, more preferably from 250 to 350 mm. It is practical to choose a suitable thickness within the range in accordance with the form and object of use. A thickness less than 0.1 mm is not recommendable because sufficient heat insulation is not obtained. If the thickness exceeds 500 mm, in contrast, the cost of the material is too large for the heat insulating effect obtained and thus the heat insulating material may not be used for economical reasons. Besides, depending on the method of fixing (installing) the heat insulating material, there may be cases that the heat insulating material is deformed during use because of the shearing stress, etc. owing to the weight of the thermally sprayed film of the refractory ceramic formed on the side of the heat insulating material opposite the side at which it is fixed (installed) to the main structure. Here, "the thickness of the formed body of inorganic heat insulating fiber" means the distance from the front surface (the side on which the thermally sprayed film of the refractory ceramic is formed) to the opposite surface at which the heat insulating material is fixed (installed) to the main structure. But the thickness may not be even depending on the shape of the location where it is installed or other factors and the surface of the formed body of the inorganic heat insulating fiber may become fluffy and bumpy as explained later referring to Fig. 1(a). The above preferable thickness range applies to all the portions of the heat insulating fiber.

The formed body of the inorganic heat-insulating fiber may be used in a compressed state in order to increase its strength. In this case, the range of the density of the inorganic heat insulating fiber desirable for securing its heat insulating ability, formability and ease of installation is, usually, from 30 to 200 kg/m$^3$, preferably from 60 to 190 kg/m$^3$ or, more preferably, from 95 to 170 kg/m$^3$. When the bulk density of the inorganic heat insulating fiber is less than 30 kg/m$^3$, the formed body is bulky and its mechanical strength is low, although its heat insulating ability is good, and, for this reason, the formability and ease of installation are poor and its application especially to locations where a high load is imposed may be restricted. When the bulk density of the inorganic heat-insulating fiber exceeds 200 kg/m$^3$, on the other hand, although the formability and ease of installation are good, compressibility is deteriorated. When the inorganic heat insulating fiber thus compressed is used in the form of a rectangular block, there often occurs a problem that joints between the formed bodies of the inorganic heat insulating fiber may open and, in addition, use for an application of which an especially high heat insulating ability is required may be restricted since it is difficult to obtain good heat insulation by using a fiber material having a high bulk density.

The cloth material is meant for bringing about the useful and favorable effects described in ① to ③ above by covering the surface of the fiber body opposite the surface at which its is fixed (installed) to the main structure at least until the refractory ceramic powder material is sprayed by flame fusion coating. Accordingly, the cloth material may burn out at the flame fusion coating of the refractory ceramic powder material during the processes of fabrication of the heat insulating material and not remain as a component of the highly durable heat insulating material (such a lost cloth material may be hereinafter called, simply, the burned out cloth material), or it may remain as a component of the highly durable heat insulating material (such a remaining cloth material may be hereinafter called, simply, the unburned residual cloth material). The highly durable heat insulating material having the characteristics according to the present invention cannot be obtained unless the cloth material is involved, at least, at a stage of its fabricating process.

When the raw material mix of the constituents of the surface hardening material in a liquid or a paste is applied to the surface of the cloth material, it quickly infiltrates into the surface layer of the fiber body without separating into two phases (this characteristic of the cloth material may be simply called liquid permeability). For this reason, it is preferable that the raw material mix of the constituents of the surface hardening material can infiltrate into the interior of the formed body of inorganic heat insulating fiber. In order for this to happen, it is preferable that the cloth material has openings (mesh of knit or woven texture) of a size to let the raw material mix of the constituents of the surface hardening material pass through without separating into two phases.

The size of the mesh of the cloth material has to be, usually, from 0.2 to 10 mm, preferably from 0.4 to 5 mm or, more preferably from 0.8 to 2.5 mm. When the size of the mesh of the cloth material is less than 0.2 mm, whether the cloth material is hydrophilic or hydrophobic has a large influence: if the cloth material is hydrophobic, the raw material mix of the constituents of the surface hardening material in a liquid or a paste does not pass through its openings; and, if the cloth material is hydrophilic, the components of the raw material mix of the constituents of the surface hardening material in a liquid or a paste may separate into components that can pass through the cloth material (solvent, dispersing medium or the like) and those that cannot (inorganic solid components such as alumina-silica and others constituting the main substance of the mix). Thus the mesh size less than 0.2 mm is not desirable. When the size of the mesh of the cloth material exceeds 10 mm, in contrast, there is a problem that the mesh becomes uneven because of the external pressure especially when the cloth material is soft. Another possible problem is that, when attaching the cloth material to the fiber block, a part of it may be caught by a part of the fiber block and, by the force of handling of the cloth material, the smoothness of the surface of the fiber block may be disturbed. Besides, when the mesh is coarse, the cloth material cannot cover the surface of the formed body of inorganic heat insulating fiber sufficiently, and this may make it difficult to suppress the roughness of the surface such as fluffiness and to enhance the reinforcing effect of the cloth material and, thus, to sufficiently improve the smoothness of the surface. For these reasons, a mesh size larger than 10 mm is not desirable.

The thickness of the cloth material cannot be defined uneqivocally since a desired thickness is different depending on whether or not it is burned by the flame fusion coating, the liquid permeability and the size of the openings, but it is enough if the effect of strong bonding or the binding of the application film of the surface hardening material and said roles of the cloth material are fully realized. In this sense, the thickness has to be, usually, from 0.01 to 3.0 mm, preferably from 0.02 to 1.5 mm or, more preferably from 0.04 to 0.7 mm. A thickness of the cloth material of less than 0.01 mm is not desirable, as the fiber forming the cloth material breaks easily and there is a problem that even meshes cannot be maintained and, besides, it may become difficult to sufficiently enhance the reinforcing effect and surface smoothness by suppressing the roughening such as the fluffiness of the fiber body surface by covering its surface. On the other hand, a thickness of the cloth material exceeding 3.0 mm is not desirable as, the cloth easily forms creases when covering a fiber block along a curved line or on a curved surface, and deteriorates smoothness of the portion and, besides, a large amount of the raw material mix of the constituents of the surface hardening material has to be applied in order to have it pass through the cloth material and infiltrate into the inorganic heat insulating fiber, while no additional effect, to compensate for the increased consumption of the raw material mix, is obtained. Thus, a thickness exceeding 3.0 mm is disadvantageous also in terms of work efficiency and cost performance.

The cloth material is characterized by comprising the burned out cloth material, the unburned residual cloth material or a combination of the two. Specifically, the cloth material has to be a knitted or woven sheet of, for example, glass fiber, slag fiber, metal fiber, carbon fiber, graphite fiber, alumina-silica fiber, alumina-silica-boron oxide fiber, polyacrylonitrile fiber, polyamide fiber, polyester fiber, polyvinyl alcohol fiber, polyvinylidene chloride fiber, polyvinylchloride fiber, polyethylene fiber, polypropylene fiber, polyurethane fiber, polyvinylidene cyanide fiber, polyurea fiber, fluoride fiber, alginic acid fiber, elastomer (Spandex) fiber, cellulose fiber, viscose rayon fiber, cellulose acetate fiber, cotton, wool, silk, hemp, asbestos, and the like (including composite fiber) used as a single material or a combination of two or more of them, with suitable treatment as required, or a non-woven fabric of any of the above materials made by properly arranging the fiber in the form of a web or mat by a proper method and bonding the fiber together with an adhesive or the fusion of the fiber itself. Thus, there is no limitation to the cloth material as far as it falls within the above description.

In the case of the unburned residual cloth material, it is desirable that its components are similar to or, ideally, the same as those of the application film of the surface hardening material in order that the high temperature characteristic of the cloth material is similar to or, preferably, the same as that of the application film of the surface hardening material. This is because, by so doing, the difference in thermal expansion during use between the unburned residual cloth material and the surface hardening material is made small and the occurrence of cracks and the like is suppressed. To achieve this, the thermal expansion coefficient (Z), namely the high temperature characteristic, of the cloth material and the thermal expansion coefficient (X), namely the high temperature characteristic, of the surface hardening material have to be controlled so as to satisfy the expression $0.8Z \leqq X \leqq 1.2Z$, preferably $0.9Z \leqq X \leqq 1.1Z$ or, more preferably $0.95Z \leqq X \leqq 1.05Z$.

Next, the application film of the surface hardening material, which constitutes one of the components of the highly durable heat insulating material according to the present invention, has to be capable of strongly bonding the formed body of the inorganic heat insulating fiber and the thermally sprayed film of the refractory ceramic, and it is preferable that the high temperature characteristic of the applied film of the surface hardening material is similar to that of the thermally sprayed film of the refractory ceramic. The application film of the surface hardening material according to the present invention is formed also in gaps inside the surface layer of the formed body of the inorganic heat insulating fiber and, thus, a very strong bonding effect is obtained. In addition, since it is formed on the surface of the formed body of the inorganic heat insulating fiber kept smooth by the cloth material, it has excellent properties that its surface is very smooth and that its thickness is homogeneous (see Figs. 1(e) to 1(g)).

With regard to the "high temperature characteristic" here, the thermal expansion coefficient (X), namely the high temperature characteristic, of the application film of the surface hardening material and the thermal expansion coefficient (Y), namely the high temperature characteristic, of the thermally sprayed film have to be controlled so as to satisfy the expression $0.8Y \leq X \leq 1.2Y$, preferably $0.9Y \leq X \leq 1.1Y$ or, more preferably $0.95Y \leq X \leq 1.05Y$. It is especially desirable that the components of the application film of the surface hardening material are the same as those of the thermally sprayed film of the refractory ceramic, in order that the high temperature characteristics of the two are the same. It is ideal if the components of the inorganic heat insulating fiber (if possible, also those of the unburned residual cloth material) are similar to or, if viable, the same as those of the application film of the surface hardening material and the thermally sprayed film of the refractory ceramic. The reason is that the application film of the surface hardening material, which is an intermediary, easily bonds (welds) both to the inorganic heat insulating fiber layer (and the unburned residual cloth material) and the thermally sprayed film of the refractory ceramic, fulfilling its strong binder function. Accordingly, the application film of the surface hardening material has to comprise, for example, 60 mass % of inorganic components such as alumina-silica as the main components to function as refractory materials, the balance mainly composed of inorganic materials functioning as hardening materials such as colloidal silica, silicate, phosphate, or a widely known material such as ordinary cement and alumina cement, making up 100 mass %. And 20 to 90 volume % of water and a widely known high polymer organic compound such as polyvinyl alcohol, cellulose, etc. to create viscosity, which is important for application property, are added to the above inorganic materials to compose the raw material mix of the constituents of the surface hardening material. The raw material mix thus prepared is applied to the surface of the formed body of the heat insulating fiber covered with the cloth material and forms the application film of the surface hardening material after being hardened through drying.

The alumina-silica mentioned above as a main inorganic component to function as the refractory material is only an example, and other materials such as clay, zirconia, mullite, magnesia, calcia, dolomite, silicon carbide, silicon nitride, and carbon fiber may also be used as the refractory material of the surface hardening material.

A composite material of two or more of them can also be used for the purpose. Preferable combinations of two or more of them are such as alumina + silica + zirconia, mullite + zirconia, magnesia + dolomite, alumina + silica + carbon fiber, magnesia + silica + carbon fiber, and magnesia + chromia + silica + zirconia.

The mixing rate of the water acting as the solvent (or the dispersing medium), which mainly determines the porosity of the application film of the surface hardening material after the application, drying and hardening, may be increased to 90 volume % when it is necessary to increase the heat insulating ability and flexibility of shape. The porosity can be controlled without relying on the mixing rate of the water: one of such methods is to mix a substance to flow out, burn or vaporize to disappear during heating for drying or after the application film is formed. Well-known materials such as wax, polystyrene, etc. formed into a suitable shape can be used for the purpose.

The mixing rate of the water is not limited stringently but has to be controlled to obtain an optimum viscosity in accordance with the employed method of application such as painting (with brush, trowel, etc.), spraying, dipping, etc.

Examples of the application film of the surface hardening material are explained later.

The above descriptions of the "application film of the surface hardening material" are examples only, and the application film of the surface hardening material is not limited to what are described above but it is enough for it to have the functions and required characteristics specified later.

The application of the cloth material and the formation of the application film of the surface hardening material are effective measures for solving the technical problem of conventional refractory materials without the cloth material or the surface hardening material that the thermally sprayed film does not adhere to their surfaces strongly or, if it adheres initially, easily peels off owing to an unstable bonding surface. Additionally, the application of the cloth material and the formation of the application film of the surface hardening material also bring about the useful and favorable effects ① to ③ described before, when used in the highly durable heat insulating material (in which the cloth material is not used) having an application film of a surface hardening material according to the previous patent application of the present inventors. This is explained below, for better understanding, by referring to drawings.

As seen in Fig. 1(a), the surface layer 11 of the formed body of the inorganic heat insulating fiber is bulky so as to obtain good heat insulation ability and its surface is not flat or smooth but fluffy.

In the case of a conventional refractory material having a film of a refractory ceramic powder material formed on a surface of a formed body of such a fiber material by flame fusion coating, what happens is as follows: a thermally sprayed layer 13 of the refractory ceramic has a shape following the bumpiness of the fluffy and irregular-shaped surface layer 11 of the fiber body, as shown in Fig. 1(b), and no infiltration of the thermally sprayed material into the inside of the surface layer 11 of the fiber body takes place; as a result, the thermally sprayed film of the refractory ceramic does not adhere easily to the fiber body surface or, if it adheres initially, easily peels off owing to an unstable bonding surface.

On the other hand, in the case that an application film of the surface hardening material is formed by applying the raw material mix of the constituents of the surface hardening material in a liquid or a paste, by some suitable method, to the surface of the fiber body without using the cloth material, what happens is as follows: the fluffiness of the surface layer 11 of the fiber body is controlled during the application work as shown in Fig. 1(c), and infiltration of the raw material mix of the constituents of the surface hardening material into the inside (gaps) of the surface layer 11 of the fiber body takes place; consequently, the application film 15 of the surface hardening material is tangled with the fiber to form a strong bonding by the drying and baking after the application; thus the bonding layer between the surface layer 11 of the fiber body and the application film 15 of the surface hardening material is stable and little peeling occurs; and the outer surface of the application film 15 of the surface hardening material is flatter and smoother. Nevertheless, the outer surface of the application film 15 of the surface hardening material still has some bumpiness and its thickness is not sufficiently even.

Therefore, in the case of a highly durable heat insulating material having a thermally sprayed film formed by thermal spraying of a refractory ceramic powder material onto the surface of a fiber body covered with the raw material mix having the composition of the surface hardening material, adhesion (or welding) of the thermally sprayed film to the surface of the application film 15 of the surface hardening material is good as shown in Fig. 1(d), and a strong thermally sprayed film 13 is formed thanks to a stable and hardly separating bonding surface between the application film 15 of the surface hardening material and the thermally sprayed film. But, since the application film 15 of the surface hardening material still has some bumpiness, the surface of the thermally sprayed film 13 formed on the application film 15 is inevitably bumpy. As a result, dust and mill scale are likely to stick at the uneven surface portions and accumulate during use. Besides, since the thickness of the application film 15 of the surface hardening material is uneven, cracks are likely to develop owing to the difference in thermal expansion during use as explained before.

In the case that the cloth material covers the surface of the fiber body, by covering the surface 11 of the fiber body with a cloth material 17 having a suitable mesh size as seen in Fig. 1(e), the fluffiness of the surface 11 of the fiber body as seen in Fig. 1(a) is almost completely suppressed and the surface layer 11 of the fiber body covered with the cloth material is kept very smooth. Therefore, when the heat insulating material is transported and installed in the completed state as described above, its surface is not made fluffy by the handling.

Next, when the application film of the surface hardening material is formed on a smooth outer surface of the fiber body without the fluffiness, owing to the cover of the cloth material, by applying the raw material mix of the constituents of the surface hardening material, as a liquid or a paste, by some suitable method, what happens is as follows: the raw material mix of the constituents of the surface hardening material passes through the cloth material 17 and evenly infiltrates into the inside (gaps) of the surface layer 11 of the fiber body as shown in Fig. 1(f); the application film 15 of the surface hardening material, tangled with the fiber, forms a strong bonding in an integrated manner through drying and baking after the application; as a consequence, strong bonding is obtained among the surface layer 11 of the fiber body, the cloth material 17 and the application film 15 of the surface hardening material; and the outer surface of the application film 15 of the surface hardening material becomes very smooth, and its thickness becomes satisfactorily homogeneous.

Therefore, in the case of a highly durable heat insulating material according to the present invention having a thermally sprayed film formed by thermally spraying a refractory ceramic powder material onto the highly smooth surface of the fiber body covered with the raw material mix having the composition of the surface hardening material, adhesion (or welding) of the thermally sprayed film to the surface of the application film 15 of the surface hardening material is good as shown in Fig. 1(g), and a firmly bonded thermally sprayed film 13 is formed owing to a stable bonding surface, which does not peel off easily, between the application film 15 of the surface hardening material and the thermally sprayed film 13. Additionally, the application film 15 is so smooth that the thermally sprayed layer 13 formed thereon is also smooth and free from bumpiness. As a result, as explained above, less dust and mill scale is deposited on the outer surface during use and the damage caused by the deposit is greatly decreased. Further, because the thickness of the application film of the surface hardening material and that of the thermally sprayed film are homogeneous, cracks caused by the difference in thermal expansion are unlikely to occur during use. Note that the example shown in Fig. 1(g) is the case of the unburned residual cloth material. In the case of the burned out cloth material, the cloth material 17 in the figure disappears during the flame fusion coating work and the application film 15 of the surface hardening material fills the space.

The application film of the surface hardening material also acts as a heat insulator during the thermal spraying work and effectively prevents the fiber body from deteriorating owing to crystallization and other changes of the fiber at high temperatures by hindering the heat of the thermal spraying from being directly conducted to the fiber body and so forth. Note that the heat insulating effect of the fiber layer little changes even if the raw material mix of the constituents of the surface hardening material infiltrates into it in a great quantity. It is, therefore, not necessary to increase the thickness of the application film of the surface hardening material, and the thickness has to be, usually, from 0.1 to 10 mm, preferably from 0.5 to 5 mm or, more preferably, from 1 to 3 mm. A thickness of the application film of the surface hardening material exceeding 10 mm is not economical because, while the heat insulating effect of the fiber layer does not increase, the costs of installation work increase. When the thickness of the application film of the surface hardener material is less than 0.1 mm, on the other hand, the raw material mix of the constituents of the surface hardening material has not infiltrated into the fiber layer in a great quantity and the heat insulating property of the fiber layer is not adversely affected, but the application film of the surface hardening material does not fully exercise its essential function and it becomes difficult to strongly bond the fiber layer to the thermally sprayed film. Note here that the "thickness of the application film of the surface hardening material" has to be within the thickness range specified above at any part of it.

There is no specific limitation as to the composition of the "application film of the surface hardening material" insofar as the roles and required characteristics described below are fulfilled.

### 1. Roles

(1) After applying and drying the raw material mix of the constituents of the surface hardening material, a smooth and hard application film layer of the surface hardening material is formed on a surface of the fiber body.

As a result, the thermally sprayed layer firmly adheres to the application film layer without gaps.

(2) When the raw material mix of the constituents of the surface hardening material is applied, the raw material mix of the constituents of the surface hardening material in a liquid or a paste infiltrates into the fiber body and a composite layer of the fiber and the raw material mix of the constituents of the surface hardening material is formed.

The composite layer forms a bonding layer between the application film (coating) layer composed of only the surface hardening material and the inorganic heat insulating fiber (matrix fiber) layer after the drying.

(3) The application film (coating) layer composed of only the surface hardening material protects the inorganic heat insulating fiber layer from the high temperature flame during the thermal spraying work.

(4) To prevent cracks from occurring in the thermally sprayed layer of the refractory ceramic by following the contraction of the thermally sprayed layer during cooling after it is thermally sprayed.

(5) To act as a bond (binder) between the fiber body and the thermally sprayed film.

### 2. Required characteristics

(1) To be in a liquid or a paste during the application work, that is, to be able to infiltrate into the fiber layer to some extent and form a film layer on the outer surface of the fiber body.

(2) To solidify through drying to form the composite layer with the fiber and the film layer.

(3) To be able to follow the contraction of the thermally spayed layer during cooling. This does not necessarily mean that its thermal contraction coefficient is similar to that of the thermally sprayed layer but that the structure of the surface hardening material layer is flexible or loose, allowing some deformation.

(4) To be a refractory and heat insulating material, preferably a highly durable refractory and heat insulating material excellent in durability such as heat resistance, slag resistance, molten steel resistance, wear resistance, and mechanical impact resistance.

### 3. Material quality and examples of the use of the application film of the surface hardening material

(1) The application film of the surface hardening material having the roles and required characteristics listed above is composed so as to have a heating contraction coefficient basically similar to that of the inorganic heat-insulating fiber. Note that, in the cases that alumina-silica or a similar material is used as its main component, an alumina-rich composition is preferable for obtaining good corrosion resistance of the outer surface (coating) layer.

(2) In the component of the raw material mix of the constituents of the surface hardening material, which is the raw material of application film of the surface hardening material, the liquid component is a dispersing medium or a solvent such as water and the solid components are composed of surface hardening substances in the form of filler (in grains) or fine fiber, or the like. It may additionally contain some quantities of organic binders (room temperature-setting), inorganic binders (high temperature-setting), a dispersing agent (a surface-active agent), etc.

(3) The fine fiber constituting a part of the surface hardening substances shows strengthening effects, together with the binders, by clinging to the inorganic heat insulating fiber and the filler constituting another part of the surface hardening substances. For this reason, it is preferable that the raw material mix of the surface hardening material contains some fine fiber.

(4) The amount of its application is, in terms of the raw material mix of the constituents of the surface hardening material in a liquid or a paste, usually from 0.5 to 30 kg/m$^2$ (from 0.3 to 18 kg/m$^2$ in terms of the solid components), preferably from 1.5 to 10 kg/m$^2$ (from 1.0 to 6 kg/m$^2$ in terms of the solid components) or, more preferably, from 3 to 10 kg/m$^2$ (from 1.8 to 6 kg/m$^2$ in terms of the solid components). When the application amount of the raw material mix of the constituents of the surface hardening material is less than 0.5 kg/m$^2$ (less than 0.3 kg/m$^2$ in terms of the solid components), a sufficient application film of the surface hardening material is not formed on the surface of the inorganic heat insulating fiber layer and, as a result, the heat insulating effect of the fiber layer and the infiltration of the raw material mix of the constituents of the surface hardening material into the inside of the inorganic heat insulating fiber layer may become insufficient, leading to difficulty in forming a strong thermally sprayed film. On the other hand, an application amount of the raw material mix of the constituents of the surface hardening material exceeding 30 kg/m$^2$ (exceeding 18 kg/m$^2$ in terms of the solid components) is not economical because, while the heat insulating effect of the fiber layer remains unchanged, the costs of installation work increase. Note that the solid components here correspond to the amount (density) of the application film of the surface hardening material obtained through drying and baking the raw material mix of the constituents of the surface hardening material.

In the present invention, the highly durable heat insulating material has the thermally sprayed film of refractory ceramic on the surface of the formed body of the inorganic refractory fiber which is covered with a cloth material or was covered with the cloth"material until it burned out during the fabricating process of the heat insulating material, with an application film of a surface hardening material "acting as an intermediary" between the thermally sprayed film and the fiber body. The expression "acting as an intermediary" is used here in consideration of the following two factors: that the highly durable heat insulating material according to the present invention may have a multi-layered structure comprising the three to four components; and that the application film of the surface hardening material may have a multi-layer structure. In the latter case, the side of the application film of the surface hardening material contacting the inorganic heat insulating fiber (and the cloth material, as the case may be) has a composition affinitive to the fiber, and the other side contacting the thermally sprayed film of the refractory ceramic has another composition affinitive to the refractory ceramic. By so doing, the application film of the surface hardening material better adheres to the fiber layer and, further, the thermally sprayed film also better adheres (is better welded) to the surface hardening material.

Here, the material of said refractory ceramic is not stringently limited but any material considered as best suitable may be selected according to the object of use. One or more of publicly known refractory ceramic materials such as alumina-silica, fire clay, zirconia, mullite, zircon, magnesia, calcia, dolomite, chamotte, corundum, bauxite, alunite, silicon carbide and chromite as simple substances and composites of them may be selected as deemed appropriate. Preferable combinations of the composites include alumina + silica + zirconia, mullite + zirconia, magnesia + dolomite, magnesia + chromia + silica + zirconia, alumina + silica + magnesia, alumina + magnesia, alumina + silica, and so forth.

The optimum thickness of the thermally sprayed film of the refractory ceramic varies depending on the form and object of use and thus it is inappropriate to unequivocally define an optimum thickness. However, a suitable thickness range for securing durability (heat resistance, slag resistance, molten steel resistance, wear resistance, and mechanical impact resistance) is from 0.1 to 100 mm, preferably from 0.5 to 50 mm or, more preferably, from 1 to 25 mm. The thickness has to be decided in accordance with the form and object of use within the range. A thickness of the thermally sprayed film of the refractory ceramic less than 0.1 mm is not preferable since the durability will not be sufficient. In contrast, a thickness exceeding 100 mm is not economical since sufficient durability has already been secured with a thickness of 100 mm and a better effect justifying the additional thickness is not obtained. Besides, the thermally sprayed film may fall off the fiber layer of its own weight. Note here that the "thickness of the thermally sprayed film of a refractory ceramic" has to be within the thickness range specified above at all portions of the thermally sprayed film.

The amount of the thermally sprayed film of the refractory ceramic is usually from 0.5 to 500 kg/m$^2$, preferably from 3 to 250 kg/m$^2$ or, more preferably, from 5 to 125 kg/m$^2$. An amount below 0.5 kg/m$^2$ is not desirable since sufficient durability is not secured. An amount exceeding 500 kg/m$^2$, on the other hand, is not economical since sufficient durability has already been secured with the amount of 500 kg/m$^2$ and a better effect justifying the additional amount is not obtained. Besides, the thermally sprayed film of the refractory ceramic may fall off the fiber layer of its own weight.

The method of fabricating the highly durable heat insulating material according to the present invention comprises the following steps: (1) to cover a surface of the formed body of the inorganic heat insulating fiber having a desired shape with the cloth material by a suitable attachment means; (2) to apply the raw material mix of the constituents of the surface hardening material in a liquid or a paste to the surface of the formed body of the heat insulating fiber covered with the cloth material by a publicly know method of applying (or painting) (and, if necessary, to dry the raw material mix to form the application film of the surface hardening material); and then (3) to form the thermally sprayed film of the refractory ceramic on the surface of the application film of the surface hardening material by thermally spraying the refractory ceramic powder material by a publicly known thermal spraying method onto the surface of the formed body of the heat insulating fiber covered with the raw material mix of the constituents of the surface hardening material or the surface of the application film of the surface hardening material. The method of fabricating the highly durable heat insulating material according to the present invention is characterized, preferably, by forming the application film of the surface hardening material and the thermally sprayed film of the refractory ceramic by: covering a surface of the formed body of the inorganic heat insulating fiber with the cloth material; applying the raw material mix of the constituents of the surface hardening material to the surface of the formed body of the heat insulating fiber covered with the cloth material; and applying the refractory ceramic powder material by flame fusion coating to the surface of the formed body of the heat insulating fiber covered with the raw material mix of the constituents of the surface hardening material.

The formed body of the inorganic heat insulating fiber has already been explained hereinbefore and the explanations thereof are not repeated here to avoid redundancy.

There is no specific limitation as to the method of manufacturing the inorganic heat insulating fiber, and any conventionally known technology can be employed as deemed appropriate for manufacturing inorganic heat insulating fiber, such as, but not limited to, the methods of manufacturing inorganic heat insulating fiber disclosed in Japanese Unexamined Patent Publication No. S63-60125 (Method of and Apparatus for Manufacturing Inorganic Fiber), Japanese Unexamined Patent Publication No. S63-21234 (Method of and Apparatus for Supplying Molten Inorganic Substance), and so forth. The fiber may also be manufactured by spinning during synthesis through hydration from organomineral compounds of alocoholate or alkoxide.

The functions and specifications of the cloth material have already been explained herein and the explanations thereof are not repeated here to avoid redundancy.

There is no specific limitation as to the method of manufacturing the cloth material and any conventionally known fiber manufacturing method can be employed as deemed appropriate. A wide variety of cloth materials available in the market can be used as the cloth material according to the present invention after cutting to a desired size.

There is no specific limitation either as to the method of covering the fiber body with the cloth material and the description of the present invention regarding the method has to be interpreted in the broadest possible manner. For instance, Japanese Unexamined Utility Model Publication No. S62-52894 proposes a ceramic fiber block formed by folding a fiber blanket in zigzag, wherein the outer surfaces of the bent portions of the blanket of the block, which portions are exposed to a high temperature atmosphere, are covered with a protection sheet. In the case that the cloth material according to the present invention is used in place of said protection sheet, the cloth material may be attached onto the surface of the block by inserting its ends between a zig and a zag of the blanket, or, if the ceramic fiber block formed by folding the fiber blanket is held together with a string, by putting both the edges of the cloth material under the string. These methods of attaching the cloth material may be combined with another method in which an adhesive such as a water-solution of polyvinyl alcohol is applied to the cloth material and the cloth material is glued to the blanket before it is folded, then the adhesive is dried and the blanket is folded to form the block.

The cloth material may be attached to a formed body of the ceramic fiber of any shape in any of the following manners or the like: that the cloth material is glued wholly or partially to a fiber block with an adhesive; strings are fixed to the ends of the cloth material and it is attached to the formed body of the inorganic heat insulating fiber by banding it with the strings; that a bag is made of the cloth material and an entire formed body of the inorganic heat insulating fiber is put into the bag; that the cloth material is fixed to the formed body of the inorganic heat insulating fiber with fixtures such as staples; and that the cloth material is put on a surface of the formed body of the inorganic heat insulating fiber and is fixed to the fiber body with rubber bands or strings.

The raw material mix of the constituents of the surface hardening material has to be in a liquid or a paste containing the constituents of the surface hardening material specified hereinbefore. By being in a liquid or a paste, it can be applied effectively to the surface of the formed body of the inorganic heat insulating fiber covered with the cloth material by conventionally known application methods and, thus, the roles and required characteristics of the application film of the surface hardening material specified hereinbefore are satisfied.

Accordingly, the raw material mix of the constituents of the surface hardening material may contain a volatile dispersing medium or solvent, a suitable dispersing agent (surface-active agent) if necessary, a binder, an organic substance in grains or fiber for forming bubbles, a high molecular compound to control the viscosity of the dispersoid, and so forth, in addition to the constituents of the surface hardening material specified before.

The surface hardening material has to contain components to form a desired application film of the surface hardening material through baking by the heat of the thermal spraying after its application and, if necessary, drying, and it has to contain the constituents of the surface hardening material described before in the forms of filler (grains), fine fiber and the like. The fine fiber has the advantage to strengthen the application film, together with the binder(s), by clinging to the inorganic heat insulating fiber (and the cloth material) and the filler. It is, therefore, desirable that the amount of the constituents in the form of fine fiber (solid ingredients) of the application film of the surface hardening material is, usually, from 2 to 20 mass % of the whole raw material mix of the constituents of the surface hardening material, preferably from 4 to 15 mass % or, more preferably, from 5 to 10 mass %. The diameter of the fine fiber is, preferably, 1 to 10 μm and its aspect ratio (length / diameter) 100 to 4,000. A fiber having a diameter less than 1 μm is difficult to manufacture, and a fiber having a diameter exceeding 10 μm does not cling to the filler easily. A fiber having an aspect ratio smaller than 100 does not cling to the filler easily and, when the aspect ratio exceeds 4,000, the surface of the fiber body becomes uneven and the thermally sprayed film peels off more easily.

The total content of the constituents of the application film of the surface hardening material in the raw material mix of the constituents of the surface hardening material is usually from 35 to 95 mass %, preferably from 40 to 80 mass % or, more preferably, from 55 to 75 mass %. When the percentage is below 35 mass %, the application film of the surface hardening material does not penetrate into the inside of the inorganic heat insulating fiber layer, covering sufficiently the inside and the surface of the fiber body (and the cloth material) and, as a consequence, it becomes difficult to form a thermally sprayed film firmly bonded to the fiber body with sufficient entanglement with the inorganic heat insulating fiber. If the percentage exceeds 95 mass %, on the other hand, it becomes difficult to apply the raw material mix evenly. The contents (mixing ratios) of individual constituents of the surface hardening material have already been explained before and the explanations thereof are not repeated here.

The application film of the surface hardening material is composed of constituents having different chemical compositions, in most cases. A desired grain size of the constituents varies depending on their shape but, usually, any of the constituents has to have a grain size of 0.01 to 1,000 μm, preferably, 0.01 to 300 μm or, more preferably, 0.01 to 100 μm, in order that the raw material mix is prepared in the form of a liquid or a paste. Constituents of the surface hardening material having a grain size smaller than 0.01 μm are difficult to produce. On the other hand, a grain size exceeding 1,000 μm is not desirable since it becomes difficult to evenly apply the raw material mix of the constituents of the surface hardening material and, besides, when passing through the openings (knit or woven mesh) of the cloth material, the raw material mix easily separates into liquid components, which pass through the cloth material easily, and solid components, which do not.

The dispersing medium or solvent of the raw material mix of the constituents of the surface hardening material has to be the one that can effectively disperse or dissolve the constituents of the surface hardening material in itself, so that the raw material mix of the constituents of the surface hardening material takes the form of a liquid or a paste in order that the constituents of the surface hardening material easily infiltrate into the fiber body through the cloth material without separating. Specifically, water is a good example, but other substances may also be used for the purpose.

There is no special limitation as to what should be used as the dispersing agent (or a surface-active agent) to be added to the raw material mix of the constituents of the surface hardening material, when required. Any of conventionally known inorganic dispersing agents, surface-active agents or colloid forming agents, whatever they may be called, can be used for the purpose insofar as it can effectively and evenly disperse the constituents of the application film of the surface hardening material in the dispersing medium.

Further, there is no special limitation as to what should be used as the binder to be added to the raw material mix of the constituents of the surface hardening material, when such is necessary. Any of conventionally known organic binders (room temperature-setting), inorganic binders (high temperature-setting) and the like suitable for the use can be chosen for the purpose. Specifically, colloidal silica, silicates, phosphates, ordinary cement, and alumina cement can be named as examples. These may be used independently or as a combination of two or more.

The word "application" has to be interpreted as broadly as possible, and any conventionally known method of application such as painting (with brush, trowel, or the like), spraying, dipping or similar may be employed. It is desirable that, after the application by any of the above methods, the raw material mix of the constituents of the surface hardening material is dried naturally for 10 to 60 min. and then dried at 1,000 to 1,500°C for 1 to 20 min. by a flame of a thermal spraying burner.

The composition of the refractory ceramic powder material, which is to be thermally sprayed onto the surface of the formed body of the heat insulating fiber covered with the application film of the surface hardening material or its raw material mix, has already been explained in the description on the thermally sprayed film of the refractory ceramic hereinbefore and the explanations thereof are not repeated here.

The grain size of the refractory ceramic powder material is not stringently specified as far as the material welds onto the surface to be coated with it (specifically, the surface of the formed body of the heat insulating fiber covered with the raw material mix of the constituents of the surface hardening material or the surface of its application film) in a completely molten state by the heat of the thermal spraying, and the grain size can be chosen, as deemed appropriate, in accordance with the capacity of the thermal spraying facility or the use of the heat insulating material. However, in most cases, the grain size is from 1 to 1,000 μm, preferably 1 to 300 μm or, more preferably, 10 to 210 μm. If the grain size of the refractory ceramic powder material is smaller than 1 μm, a homogeneous flow of the powder is hindered owing to its poor fluidity, leading to problems such as uneven thickness of the thermally sprayed layer and mixing of non-melted portions in the layer. On the other hand, if the grain size exceeds 1,000 μm, the refractory ceramic powder material does not melt fully, leading to problems that the adhesion of the thermally sprayed layer is not strong enough, that a compact and strong thermally sprayed layer is not obtained, and so forth.

When the refractory ceramic powder material is thermally sprayed, the raw material mix of the constituents of the surface hardening material applied to the surface of the fiber body may have been dried and changed into an application film or it may be still wet. The raw material mix of the constituents of the surface hardening material is dried naturally and then, further, by heating to form a tightly bonded application film, but it is preferable to use the heat of the thermal spraying for drying because this is more economical. Note that there is no problem if a volatile or combustible dispersing medium, a combustible dispersing agent (surface-active agent) or an organic binder is used in the raw material mix of the constituents of the surface hardening material, since the raw material mix of the constituents of the surface hardening material applied to the surface of the fiber body is heated to a very high temperature by the thermal spraying and the volatile or combustible substances are easily burned. For this reason, the volatile substances will not constitute a part of the application film of the surface hardening material of the highly durable heat insulating material finally fabricated, nor will most of the combustible substances, and only small amounts of their residual components will be contained in the application film. Likewise, if the cloth material is burnable by the heat of the thermal spraying, it will burn and disappear during the thermal spraying (including the case that a small amount of its residual components is left behind).

There is no stringent restriction either regarding the method of thermally spraying the refractory ceramic powder material and any of conventionally known thermal spraying technologies such as flame fusion coating, plasma'spraying, electric arc spraying, etc. can be employed for the purpose. The flame fusion coating method is preferable since the apparatus can be compactly designed for portability and easy handling. More specifically, any of the thermal spraying methods according to Japanese Examined Patent Publications Nos. S57-16309, S57-56668, S58-32314, S58-46545, S60-40597, S60-54258 and S61-10418 can be selected as deemed appropriate.

A flame fusion coating method is explained below referring to Fig. 2 as an example of the thermal spraying methods. A refractory ceramic powder material having an average grain size of 20 μm, an oxygen source such as oxygen gas, oxygen-enriched gas and a fuel such as LPG are fed to a thermal spraying burner 21 through pipes 23 (for LPG), 25 (for oxygen) and 27 (for the refractory ceramic powder material), a flame 29 is formed there through the combustion of the fuel such as LPG and the oxygen source such as oxygen gas, and is blown together with the refractory ceramic powder material. The refractory ceramic powder material melts completely during the travel in the flame 29, at 2,000°C or more in temperature, and hits the raw material mix of the constituents of the surface hardening material or the application film 35 of the surface hardening material applied to or formed on the surface of the formed body of the inorganic heat insulating fiber 31 covered with the cloth material 33 together with the flame blown from the thermal spraying burner 21, to form the thermally sprayed film 37 of the refractory ceramic.

Next, the use of a highly durable heat insulating material according to the present invention includes those in which the highly durable heat insulating material is used as a part or the whole of their refractory material. Specifically, a furnace, a smoke exhaustion facility, and a tunnel can be named as examples.

A furnace according to the present invention is, therefore, characterized by having the highly durable heat insulating material as a part or the whole of its refractory material.

The kind of furnace in which the highly durable heat insulating material is used as a part or the whole of its refractory material is not stringently limited, and it includes, but not limited to: an industrial furnace such as a heating furnace, a hot blast stove, a heat treatment furnace and an electric furnace; a melting furnace and the like for steel industry such as a blast furnace, a converter and a refining furnace; a metal melting and refining furnace such as a cast metal melting and refining furnace, an aluminum melting and refining furnace, a zinc melting and refining furnace and a copper melting and refining furnace; a glass melting furnace; a cement kiln; a lime kiln; an earthenware kiln; an incinerator; and a melting furnace for sludge, refuse, etc.

In a furnace according to the present invention, the highly durable heat insulating material is used as a part or the whole of its refractory material, specifically, to its furnace walls, ceilings, covers, support columns, etc. Besides these, said heat insulating material is applicable also to a wide variety of metal melting and refining vessels and molten metal transportation vessels such as an iron ladle, a steel ladle, a torpedo car, etc.

Especially in furnace ceilings, covers for iron or steel ladles, seal covers of a refining facility, trough covers and covers for a tundish (hereinafter written simply as TD), where a strength as high as that of conventional refractory bricks is not required, the entire refractory material can be replaced with the highly durable heat insulating material according to the present invention and, by this, the work efficiency of partial repair work is much enhanced. Since only a damaged portion of the refractory material has to be replaced with a new one for repair, the highly durable heat insulating material according to the present invention is very economical, too. Bedsides, since the weight of a furnace ceiling is significantly reduced by the use of the highly durable heat insulating material according to the present invention, the structure of the columns and walls supporting the ceiling can be simplified and, thus, the weight of the whole furnace can be decreased.

Then, a smoke exhaustion facility according to the present invention is characterized by having the highly durable heat insulating material as a part or the whole of its refractory material.

Here, a smokestack, a gas duct, etc. can be named as examples of the smoke exhaustion facility.

Since a strength as high as that of conventional refractory bricks is not required in these smoke exhaustion facilities, the whole refractory material of a unit can be replaced with the highly durable heat insulating material according to the present invention, and the mass of the entire structure is greatly reduced. Besides, even if the highly durable heat insulating material according to the present invention is damaged during use after the initial installation, only the damaged portion has to be replaced with a new one for repair, and thus the highly durable heat insulating material raises work efficiency and is very economical, too.

A tunnel according to the present invention is also characterized by having the highly durable heat insulating material as a part or the whole of its refractory material.

Here, a roadway tunnel, a railway tunnel, a subway, a passage of an underground shopping area, etc. can be named as examples of the tunnel.

In these tunnels, refractory materials are used for protecting the concrete tunnel walls against the heat of fire, and weight reduction of the refractory materials is of great importance. Even if the highly durable heat insulating material installed on the ceiling of a tunnel falls in an accident, it is not dangerous since it causes little harm to the cars, trains and people in the tunnel.

There is no stringent restriction as to the method of using (installing) the highly durable heat insulating material according to the present invention in any of the furnace, smoke exhaustion facility, tunnel, etc. which constitutes the use of the highly durable heat insulating material, as a part or the whole of its refractory. The highly durable heat insulating material, in block or any other form, fabricated to a prescribed size may be fixed onto the structure to be covered using suitable fixtures, in the same manner as employed in installing conventional refractory materials such as bricks. Any other installation methods can also be employed.

A preferable method of installing the highly durable heat insulating material for the above uses is as follows: to cover a surface of a steel shell, a refractory material or concrete with a formed body or bodies of the inorganic heat insulating fiber a surface of which is covered in advance with the cloth material; to apply the surface hardening material to the surface of the formed body of the refractory fiber covered with the cloth material; and to form the application film of the surface hardening material and the thermally sprayed film of the refractory ceramic by spraying the refractory ceramic powder material by flame fusion coating onto the surface of the formed body of inorganic heat insulating fiber to which the raw material mix of the constituents of the surface hardening material was applied. The reason why this method is preferable is that, if the highly durable heat insulating material is fabricated in advance to a prescribed dimension and installed for respective uses, there will likely be gaps between units of the prefabricated units of the heat insulating material and thus a sufficient heat insulating effect may not be obtained, but, by the above method, the highly durable heat insulating material is fabricated at the same time it is installed for respective uses. By this method, the fiber bodies do not become fluffy, its handling is easy and its installation work can be done efficiently, and a strong and continuous thermally sprayed film strongly adhering to the heat insulating material is formed. Besides, since the thermally sprayed film can be formed continuously by the flame fusion coating method, not interrupted at the joints between the fiber body units installed in advance on the structure to be protected, an excellent heat insulating effect is obtained. In addition, the above method is effective and efficient in the kind of use or position which is difficult to cope with using standardized units of materials such as blocks and which requires fitting work at the site.

Example

Example 1

The formed body of the inorganic heat insulating fiber used for the test described below was a fiber block 1 ( having an average fiber diameter of 4 $\mu$m, a block dimension of 300 mm wide x 300 mm long x 300 mm thick, the length being measured under a 30% compression in terms of volume from a state where no external load is imposed, and a block density of 130 kg/m$^3$) having the chemical composition shown in Table 1.

The cloth material used in the test was a rayon cloth having a mesh of roughly 1.2 x 1.6 mm, specifically, a plain woven cloth material of Tobis No. 30 count single yarn (both warp and woof) with 18 warps and 14 woofs in 1 inch square of Toho Rayon Co., Ltd.

The outer surface of the folded portions of the above ceramic fiber block 1, which is exposed to a high temperature atmosphere, formed by folding a ceramic fiber blanket in a zigzag, was covered with the cloth material specified above. The cloth material was attached to the fiber block by inserting each of its ends between a zig and a zag of the blanket and folding both the edges onto side surfaces of the block not exposed to the high temperature atmosphere. Then steel channels 40 to fix the ceramic fiber block were welded onto the steel shell of a TD cover 41 as shown in Figs. 3 and 4. After that, the surface 31a of the ceramic fiber block 31 to be exposed to the high temperature atmosphere as a working surface but not covered by the above method was covered with a cloth material 33 by spraying acrylic rubber onto the surface of the ceramic fiber blanket with an aerosol adhesive 55 of Sumitomo 3M Co., Ltd.

The raw material mix of the constituents of the surface hardening material (having the following detailed composition to form the application film of the surface hardening material specified in Table 1: 10 mass % PVA water solution being added at the rate of 2 mass % to the total of 100 mass % made up of 40 mass % of alumina; 9 mass % of silica; 1 mass % of zirconia; and 50 mass % of water) was sprayed onto the surface of the formed body of the fiber block 1 covered with the cloth material at an application amount of 8 kg/m$^2$ (4 kg/m$^2$ in terms of the solid components). The raw material mix was dried naturally for 30 min. and then dried at 1,000°C for 5 min. using the flame of a thermal spraying burner.

A highly durable heat insulating material <1> and, at the same time, a TD cover <1> having the highly durable heat insulating material <1> as a part of its refractory material were fabricated by: applying flame fusion coating of a refractory ceramic powder material, wherein oxygen and LPG were added and a thermal spraying burner was used as shown in Fig. 2, composed of 70 mass % % of alumina powder having a maximum grain size of 210 μm and 30 mass % of silica powder having a maximum grain size of 210 μm as shown in Table 1, onto the surface of the formed body of the heat insulating fiber covered with the raw material mix of the constituents of the surface hardening material; and by so doing, forming, simultaneously, an application film 1 of the surface hardening material 3 mm in thickness through baking the raw material mix of the constituents of the surface hardening material and a thermally sprayed body 1 of the refractory ceramic having a thickness of 3 mm and an application amount of 5 kg/m$^2$. The thickness of either the application film 1 or the thermally sprayed body 1 was measured by the observation of sections of a replica prepared in the same manner and buried in a resin block. The chemical compositions of the application film 1 of the surface hardening material and the thermally sprayed body 1 formed in the above manner are shown in Table 1.

Then, adhesion (loosening) of the thermally sprayed body, depth of melting damage and mill scale sticking index of the highly durable heat insulating material <1> were measured, and the remaining amount or fusion damage of the thermally sprayed body was measured through the trial use of the TD cover <1> fabricated as above in a TD in commercial operation and, finally, an overall evaluation was made based on the above measurements. The results are listed in Table 2.

Example 2

A highly durable heat insulating material <2> and, at the same time, a TD cover <2> having the highly durable heat insulating material <2> as a part of its refractory material were fabricated in the same manner as Example 1, except that the thickness of the thermally sprayed body 1 was changed from 3 mm to 10 mm.

Then, adhesion (loosening) of the thermally sprayed body, depth of melting damage and mill scale sticking index of the highly durable heat insulating material <2> were measured, and the remaining amount or fusion damage of the thermally sprayed body was measured through the trial use of the TD cover <2> in a TD in commercial operation and, finally, an overall evaluation was made based on the above measurements. The results are listed in Table 2.

Example 3

A highly durable heat insulating material <3> and, at the same time, a TD cover <3> having the highly durable heat insulating material <3> as a part of its refractory material were fabricated in the same manner as Example 1, except that, in place of the fiber block 1 an inorganic heat insulating fiber block 2 (having an average fiber diameter of 3 μm, a block dimension of 300 mm wide x 300 mm long x 300 mm thick, the length being measured under a 30% compression in terms of volume from a state where no external load is imposed, and a block density of 130 kg/m$^3$) having the chemical composition shown in Table 1 was used and that a thermally sprayed film of a refractory ceramic having a thickness of 3 mm and an application amount of 5 kg/m$^2$ was formed as a thermally sprayed body 2, in place of the thermally sprayed body 1, by flame fusion coating of a refractory ceramic powder material composed of 85 mass % of alumina powder having a maximum grain size of 210 μm and 15 mass % of magnesia powder having a maximum grain size of 210 μm together with oxygen and LPG using a thermal spraying burner as shown in Fig. 2.

Then, adhesion (loosening) of the thermally sprayed body, depth of melting damage and mill scale sticking index of the highly durable heat insulating material <3> were measured, and the remaining amount or fusion damage of the thermally sprayed body was measured through the trial use of the TD cover <3> in a TD in commercial operation and, finally, an overall evaluation was made based on the above measurements. The results are listed in Table 2.

Example 4

A highly durable heat insulating material <4> and, at the same time, a TD cover <4> having the highly durable heat insulating material <4> as a part of its refractory material were fabricated in the same manner as Example 3, except that the thickness of the thermally sprayed body 2 was changed from 3 mm to 10 mm.

Then, adhesion (loosening) of the thermally sprayed body, depth of melting damage and mill scale sticking index of the highly durable heat insulating material <4> were measured, and the remaining amount or fusion damage of the thermally sprayed body was measured through the trial use of the TD cover <4> in a TD in commercial operation and, finally, an overall evaluation was made based on the above measurements. The results are listed in Table 2.

Comparative example 1

A comparative highly durable heat insulating material <1> and, at the same time, a comparative TD cover <1> having the comparative highly durable heat insulating material <1> as a part of its refractory material were fabricated in the same manner as Example 1, except that no cloth material was used.

Then, adhesion (loosening) of the thermally sprayed body, depth of melting damage and mill scale sticking index of the comparative highly durable heat insulating material <1> were measured, and the remaining amount or fusion damage of the thermally sprayed body was measured through the trial use of the comparative TD cover <1> in a TD in commercial operation and, finally, an overall evaluation was made based on the above measurements. The results are listed in Table 2.

Comparative example 2

A comparative highly durable heat insulating material <2> and, at the same time, a comparative TD cover <2> having the comparative highly durable heat insulating material <2> as a part of its refractory material were fabricated in the same manner as Example 2, except that no cloth material was used.

Then, adhesion (loosening) of the thermally sprayed body, depth of melting damage and mill scale sticking index of the comparative highly durable heat insulating material <2> were measured, and the remaining amount or fusion damage of the thermally sprayed body was measured through the trial use of the comparative TD cover <2> in a TD in commercial operation and, finally, an overall evaluation was made based on the above measurements. The results are listed in Table 2.

Comparative example 3

A comparative highly durable heat insulating material <3> and, at the same time, a comparative TD cover <3> having the comparative highly durable heat insulating material <3> as a part of its refractory material were fabricated in the same manner as Example 3, except that no cloth material was used.

Then, adhesion (loosening) of the thermally sprayed body, depth of melting damage and mill scale sticking index of the comparative highly durable heat insulating material <3> were measured, and the remaining amount or fusion damage of the thermally sprayed body was measured through the trial use of the comparative TD cover <3> in a TD in commercial operation and, finally, an overall evaluation was made based on the above measurements. The results are listed in Table 2.

Comparative example 4

A comparative highly durable heat insulating material <4> and, at the same time, a comparative TD cover <4> having the comparative highly durable heat insulating material <4> as a part of its refractory material were fabricated in the same manner as Example 4, except that no cloth material was used.

Then, adhesion (loosening) of the thermally sprayed body, depth of melting damage and mill scale sticking index of the comparative highly durable heat insulating material <4> were measured, and the remaining amount or fusion damage of the thermally sprayed body was measured through the trial use of the comparative TD cover <4> in a TD in commercial operation and, finally, an overall evaluation was made based on the above measurements. The results are listed in Table 2.

Comparative example 5

A comparative highly durable heat insulating material <5> was fabricated in the same manner as Example 1, except that neither the cloth material nor the surface hardening material was used and, at the same time, a comparative TD cover <5> having the comparative highly durable heat insulating material <5> as a part of its refractory material was fabricated in the same manner as comparative examples 1 to 4 except for the differences of the comparative highly durable heat insulating material <5>.

Then, adhesion (loosening) of the thermally sprayed body, depth of melting damage and mill scale sticking index of the comparative highly durable heat insulating material <5> were measured, and the remaining amount or fusion damage of the thermally sprayed body was measured through the trial use of the comparative TD cover <5> in a TD in commercial operation and, finally, an overall evaluation was made based on the above measurements. The results are listed in Table 2.

Table 1

| | | Fiber block 1 | Fiber block 2 | Application film of surface hardening material 1 | Thermally sprayed body 1 | Thermally sprayed body 2 |
|---|---|---|---|---|---|---|
| Chemical composition (in mass %) | $Al_2O_3$ | 70 | 35 | 80 | 70 | 85 |
| | $SiO_2$ | 30 | 50 | 18 | 30 | - |
| | MgO | - | | - | - | 15 |
| | $ZrO_2$ | | 15 | 2 | - | - |

Table 2

| No. | | Example of present invention | | | | Comparative example | | | | |
|---|---|---|---|---|---|---|---|---|---|---|
| | | 1 | 2 | 3 | 4 | 1 | 2 | 3 | 4 | 5 |
| Object on which thermal spraying is done | Thickness (mm) of fiber block 1 *1 | 300 | 300 | - | - | 300 | 300 | - | - | 500 |
| | Thickness (mm) of fiber block 2 *2 | - | - | 300 | 300 | - | - | 300 | 300 | - |
| | Use or otherwise of cloth material | Used | Used | Used | Used | Not used | Not used | Not used | Not used | Not used |
| | Thickness (mm) of application film of surface hardening material *3 | 3 | 3 | 3 | 3 | 3 | 3 | 3 | 3 | - |
| Thermally sprayed layer | Thermally sprayed body 1 (mm) *4 | 3 | 10 | - | - | 3 | 10 | - | - | 3 |
| | Thermally sprayed body 2 (mm) *5 | - | - | 3 | 10 | - | - | 3 | 10 | - |
| | Adhesion (loosening) of thermally sprayed body | ○ | ○ | ○ | ○ | ○ | ○ | ○ | ○ | △ - x |
| | Depth of fusion damage *6 | No corrosion | No corrosion | No corrosion | No corrosion | No corrosion | No corrosion | No corrosion | No corrosion | No corrosion |
| | Mill scale sticking index *7 | 100 | 99 | 98 | 99 | 155 | 153 | 148 | 147 | 158 |
| Trial use in TD in commercial operation (remaining amount or damage condition of thermally sprayed body) *8 | | > 6 months | > 6 months | > 6 months | > 6 months | 3 - 3.5 months | 3 - 3.5 months | 3 - 3.5 months | 3 - 3.5 months | Not usable after 2 days' use |
| Overall evaluation | | ◎ | ◎ | ◎ | ◎ | ○ | ○ | ○ | ○ | x |

*1 - 5; Fiber blocks, application film of surface hardening material and thermally sprayed bodies have respective chemical compositions shown in Table 1.

*6; Corrosion depth was measured after spraying molten mill scale by flame fusion coating onto surface of thermally sprayed body for 10 sec.
"No corrosion" means that mill scale stuck onto thermally sprayed body surface but no fusion damage was observed.

*7; Amount, converted into index, of mill scale sticking onto thermally sprayed body surface after spraying molten mill scale by flame fusion coating from a place 1 m away from the surface. The larger the index, the larger the amount of sticking.

*8; Condition of damage and remaining service life of heat insulating materials installed in a part of TD cover were periodically confirmed.

Methods and evaluation criteria of the tests

(1) Adhesion (loosening) of the thermally sprayed body

· Test method: The adhesion (loosening or peeling) of the thermally sprayed body formed through flame fusion coating at a rate of 5 to 10 min./m$^2$ (at a flame temperature of 2,400°C) and the fiber body (the surface covered with the cloth material, as the case may be) or the application film of the surface hardening material was evaluated through visual observation of the specimen in question and microscope observation at sections of the specimen after burying it in a resin block.
· Evaluation criterion:

○ Good adhesion without loosening of the thermally sprayed body
△ Insufficient adhesion with porous structure of the thermally sprayed layer
X Peeling of the interface between the thermally sprayed layer and the fiber body

(2) Depth of melting damage

· Test method: The depth of corrosion was measured after thermal spraying of molten mill scale by flame fusion coating at a rate of 10 sec./m$^2$ (at a flame temperature of 2,400°C) onto a surface of the thermally sprayed body, the fiber body or the application film of the surface hardening material.
· Evaluation criterion:
"No corrosion" means that the mill scale sticks to the surface of the thermally sprayed body but no fusion damage has been inflicted. The occurrence or otherwise of the fusion damage was judged through the observation of sections of the specimen in question after burying it in a resin block.

(3) Mill scale sticking index

· Test method: Sticking amount of mill scale was measured after blowing molten mill scale by flame fusion coating onto the surface of the thermally sprayed body from a distance of 1 m.
· Calculation of the mill scale sticking index: The amount of mill scale sticking onto the surface of a specimen was converted into an index using the equation below. As is understood from the equation, the larger the index, the larger the mill scale sticking amount.
· Calculation of the mill scale sticking index:

(Mill scale sticking index) = 100 x ((Mill scale

sticking amount) / (Mill scale sticking amount of example

1))

(Mill scale sticking amount) = ((Mass of fiber block

after thermal spraying of mill scale) - (Mass of fiber

block before thermal spraying of mill scale))

(4) Trial use in a TD in commercial operation (the remaining amount or fusion damage of the thermally sprayed body)

· Test method: Specimens were installed at a part of a TD cover and used 1 to 3 times a day in a TD in commercial casting operation under the following conditions: normal carbon steels, at a molten steel temperature of 1,550 to 1,580°C, at a temperature of the atmosphere near the TD cover of approximately 1,800°C with a plasma heating apparatus, and for a casting time of 300 to 450 min./cast. Scale sticks to the TD cover owing to molten steel splash during casting, and the damage caused by the scale sticking was observed.

· Evaluation criterion: The extent of fusion damage and occurrence or otherwise of fall off and peeling at the thermally sprayed portions were judged by visual observation of the specimen in question installed in the TD cover.

In examples 1 to 4, no fall off or peeling of the thermally sprayed portion was observed except for only slight fusion damages after a trial use for 6 months, and the specimens were judged usable under a condition where durability is required for a long period.

In comparative examples 1 to 4, no fall off or peeling of the thermally sprayed portion was observed except for only slight fusion damages after a trial use for 3 to 3.5 months, but fall off and peeling were observed at the portions where the fusion damage had occurred when use exceeded the above period. Thus, the comparative specimens were judged suitable for further use although they would have to be changed more frequently than the specimens of examples according to the present invention.

In comparative example 5, fall off and peeling were observed at the portions damaged by the fusion after the trial use for 2 days, and the specimen was judged not suitable for further use.

(5) Overall evaluation

In examples 1 to 4, the specimens were judged very good (marked with ⊚ ) as being very excellent in heat resistance, heat impact resistance, slag resistance, molten steel resistance, and mechanical impact resistance, because, in addition to the high scale resistance explained before, they could be used without any problem for as long as 6 months exposed to a high temperature atmosphere withstanding repeated heating and cooling at every cast, the partially sticking slag and the splash of molten steel.

In comparative examples 1 to 4, the comparative specimens were judged regular (marked with ○) as being far better in heat resistance, heat impact resistance, slag resistance, molten steel resistance, and mechanical impact resistance than conventional highly durable heat insulating materials without the application film of the surface hardening material, because they could be used without any problem for 3 to 3.5 months exposed to a high temperature atmosphere withstanding repeated heating and cooling at every cast, the slag sticking partially and the splash of molten steel, although inferior in durability to the specimens according to the present invention.

In comparative example 5, the specimen was judged unsuitable (marked with X) as not having any durability comparable to that of the specimens according to the present invention, because fall off and peeling were observed at the portions where fusion damage was inflicted after the trial use for 2 days.

Industrial Applicability

A highly durable heat insulating material according to the present invention has a thermally sprayed film of refractory ceramic on a surface of a formed body of an inorganic refractory fiber which is covered with the cloth material or was covered with the cloth material until it burned out by the flame fusion coating of the refractory ceramic powder material during the fabricating process of the heat insulating material, with an application film of a surface hardening material acting as an intermediary between the thermally sprayed film and the fiber body. Thanks to the above structure, it is excellent in smoothness of the outer surface and homogeneity of the thicknesses of the application film of the surface hardening material and the thermally sprayed film of the refractory ceramic, and problems of its outer surface, such as bumpiness and cracking, are greatly reduced. As a consequence, it has a greatly improved service life. In addition, a very strong thermally sprayed film of a refractory ceramic is obtained since the application film of the surface hardening material acts as a bond (binder) between the fiber body and the thermally sprayed film, providing enhanced adhesion to the two. As a result, the thermally sprayed film is not only protective against attack caused by mill scale, alkali, etc. and very excellent in corrosion resistance, but also significantly effective for preventing the fiber body from being damaged by high speed hot blast and dust, remarkably contributing to the improvement of the service life of the heat insulating material.

By the method of fabricating a highly durable heat insulating material according to the present invention, the application film of the surface hardening material and the thermally sprayed film of the refractory ceramic are formed by: covering a surface of the formed body of the inorganic heat insulating fiber with the cloth material; applying the raw material mix of the constituents of the surface hardening material to the surface of the formed body of the heat insulating fiber covered with the cloth material; and spraying the refractory ceramic powder material onto the surface of the formed body of the heat insulating fiber coated with the raw material mix of the constituents of the surface hardening material by flame fusion coating. By the above fabricating method, excellent smoothness is given to the outer surface of the heat insulating material, the application film of the surface hardening material and the thermally sprayed film are formed to have homogenous thickness, the problems of the outer surface such as bumpiness and cracking are greatly reduced and, thus, a thermally sprayed film of the refractory ceramic excellent in heat resistance, slag resistance, molten steel resistance, wear resistance, and mechanical impact resistance can be formed. As a result, a highly durable heat insulating material excellent in durability can be fabricated.

Further, in the furnace, smoke exhaust facility, and tunnel which constitute the use of a highly durable heat insulating material according to the present invention, the highly durable heat insulating material is used as a part or the whole of their refractory material. As a result, handling and workability of the refractory material are improved since the refractory material can be made lighter in weight and thinner compared with conventional refractory materials such as bricks, and their service life is greatly enhanced owing to the excellent durability of the heat insulating material.

In addition, according to the method of installing a highly durable heat insulating material for the uses according to the present invention, a formed body or formed bodies of the inorganic heat insulating fiber a surface of which is covered in advance with the cloth material is/are fixed onto a surface of a steel shell, a refractory material or concrete to cover the surface, the raw material mix of the constituents of the surface hardening material is applied to the surface of the fiber body covered with the cloth material, and the refractory ceramic powder material is sprayed by flame fusion coating onto the surface of the formed body of the inorganic heat insulating fiber coated with the raw material mix of the constituents of the surface hardening material. By this, the formed body or formed bodies of the inorganic heat insulating fiber covered with the cloth material and excellent in surface smoothness and ease of handling can be used for the installation work, and an application film of the surface hardening material and a thermally sprayed film of the refractory ceramic can be formed on the smooth surface of the fiber body covered with the cloth material. Thus, a very strong and continuous thermally sprayed film can be formed efficiently. In addition, the above method is effective and efficient in the kind of use and position requiring site fitting work.

**Claims**

1. A highly durable heat insulating material **characterized by** having a thermally sprayed film of refractory ceramic on a surface of a formed body of an inorganic refractory fiber which surface is covered with a cloth material or was covered with the cloth material until it burned out during the fabricating process of the heat insulating material, with an application film of a surface hardening material between the thermally sprayed film and the fiber body.

2. A highly durable heat insulating material, according to claim 1, **characterized in that** the size of the mesh of said cloth material is such that a raw material mix of the constituents of the surface hardening material can pass through it without separating into component materials.

3. A highly durable heat insulating material, according to claim 1 or 2, **characterized in that** the size of the mesh of said cloth material is from 0.2 to 10 mm.

4. A highly durable heat insulating material, according to any one of claims 1 to 3, **characterized in that** said cloth material is composed of a burned out cloth material, an unburned residual cloth material or a combination of the two.

5. A highly durable heat insulating material, according to any one of claims 1 to 4, **characterized in that** said inorganic heat insulating fiber is composed of alumina-silica, clay, zirconia, mullite, zircon, magnesia, calcia, dolomite, silicon carbide, silicon nitride, carbon fiber, or a combination of two or more of them.

6. A highly durable heat insulating material, according to any one of claims 1 to 5, **characterized in that** said refractory ceramic powder material is composed of one or more selected from the group of alumina-silica, fire clay, zirconia, mullite, zircon, magnesia, calcia, dolomite, chamotte, corundum, bauxite, alunite, silicon carbide and chromite as simple substances and composites of them.

7. A highly durable heat insulating material, according to any one of claims 1 to 6, **characterized in that** the high temperature characteristic of said application film of the surface hardening material is similar to that of the thermally sprayed film of the refractory ceramic.

8. A method of fabricating the highly durable heat insulating material, according to any one of claims 1 to 7, **characterized by**:

   covering a surface of the formed body of the inorganic heat insulating fiber with the cloth material;
   applying the raw material mix of the constituents of the surface hardening material to the surface of the formed body of the inorganic heat insulating fiber covered with the cloth material; and
   forming the application film of the surface hardening material and the thermally sprayed film of the refractory ceramic by spraying refractory ceramic powder material by flame fusion coating onto the surface of the formed body of the inorganic heat insulating fiber to which the raw material mix of the constituents of the surface hardening material has been applied.

9. A furnace **characterized by** using the highly durable heat insulating material according to any one of claims 1 to 7 as a part or the whole of its refractory.

10. A smoke exhaust facility **characterized by** using the highly durable heat insulating material according to any one of claims 1 to 7 as a part or the whole of its refractory.

11. A tunnel **characterized by** using the highly durable heat insulating material according to any one of claims 1 to 7 as a part or the whole of its refractory.

12. A method of installing the highly durable heat insulating material for the use, according to any one of claims 9 to 11, **characterized by**:

covering a surface of a steel shell, a refractory material or concrete with a formed body or bodies of the inorganic heat insulating fiber a surface of which is covered beforehand with the cloth material;
applying the raw material mix of the constituents of the surface hardening material to the surface of the fiber body covered with the cloth material; and
forming the application film of the surface hardening material and the thermally sprayed film of the refractory ceramic by spraying the refractory ceramic powder material by flame fusion coating onto the surface of the formed body of the inorganic heat insulating fiber to which the raw material mix of the constituents of the surface hardening material has been applied.

Fig.1(a)

Fig.1(b)

Fig.1(c)

Fig.1(d)

Fig.1(e)

Fig.1(f)

Fig.1(g)

THERMAL SPRAYING ONLY (CONVENTIONAL TECHNOLOGY)

SURFACE HARDENING MATERIAL + THERMAL SPRAYING

CLOTH MATERIAL + SURFACE HARDENING MATERIAL + THERMAL SPRAYING

# Fig.2

# Fig.3

40

41

31a

33

33

# Fig. 4 (a)

# Fig. 4 (b)

Explanation of reference numerals

11    Surface layer of formed body of inorganic heat insulating fiber

13    Thermally sprayed film layer of refractory ceramic

15    Application film of surface hardening material

17    Cloth material

21    Thermal spraying burner

23    LPG pipe

25    Oxygen pipe

27    Ceramic powder pipe

29    Flame

31    Inorganic heat insulating fiber (ceramic fiber block)

31a   Surface of fiber block exposed to high temperature atmosphere as working surface

33    Cloth material

35    Raw material mix of constituents or application film of surface hardening material

37    Thermally sprayed film of refractory ceramic

40    Channel

41    TD cover

42    Amorphous (alumina) inorganic heat insulating fiber

## INTERNATIONAL SEARCH REPORT

| | International application No. |
|---|---|
| | PCT/JP01/04195 |

**A. CLASSIFICATION OF SUBJECT MATTER**
Int.Cl⁷   C04B41/87, 41/89

According to International Patent Classification (IPC) or to both national classification and IPC

**B. FIELDS SEARCHED**

Minimum documentation searched (classification system followed by classification symbols)
Int.Cl⁷   C04B41/80-41/91

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 4-302992 A (Ibiden Co., Ltd.),1<br>26 October, 1992 (26.10.92)   (Family: none) | 1-12 |
| A | Microfilm of the specification and drawings annexed to the request of Japanese Utility Model Application No. 91334/1974 (Laid-open No. 18349/1976), (Ibigawa Denki Kogyo K.K.), 10 February, 1976 (10.02.76)   (Family: none) | 1-12 |
| A | JP 62-288183 A (Shinagawa Refractories Co., Ltd.), 15 December, 1987 (15.12.87)   (Family: none) | 1-12 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 August, 2001 (08.08.01) | Date of mailing of the international search report<br>21 August, 2001 (21.08.01) |
|---|---|
| Name and mailing address of the ISA/<br>Japanese Patent Office | Authorized officer |
| Facsimile No. | Telephone No. |

Form PCT/ISA/210 (second sheet) (July 1992)